# EUROPEAN PATENT SPECIFICATION

(11) **EP 0 524 580 B1**
(45) Date of publication and mention of the grant of the patent: **14.12.1994**
(21) Application number: 92112372.5
(22) Date of filing: 20.07.1992
(51) Int. Cl.: F16C 33/10, B65H 57/14

(54) **Roller supporting structure using a dynamic pressure**
Mittels eines dynamischen Druckes gelagerte Rolle
Rouleau supporté par une structure utilisant une pression dynamique

(30) Priority: 23.07.1991 JP 57427/91
(43) Date of publication of application: 27.01.1993
(73) Proprietor: KOYO SEIKO CO., LTD., Chuo-ku Osaka 542 (JP)
(72) Inventor: Takahashi, Takeshi, Yamatotakada-shi, Nara-ken (JP)
(74) Representative: Glawe, Delfs, Moll & Partner

(56) References cited:
- DE-A- 2 404 325
- GB-A- 1 310 526
- US-A- 3 221 389
- US-A- 3 368 851
- US-A- 3 397 439

## Description

### BACKGROUND OF THE INVENTION

### 1. Field of the Invention

The present invention relates to a roller supporting structure for e.g., a thread feed roller or the like, which utilizes a dynamic pressure as a support means. 2. Description of the Prior Art

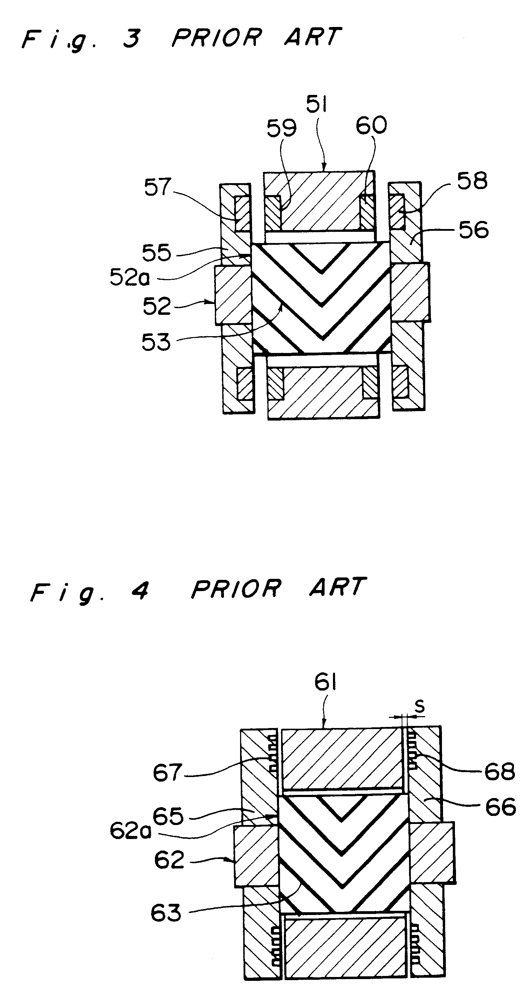

Fig. 3 shows a conventional roller supporting structure. In the supporting structure of Fig. 3, grooves for generating a dynamic pressure 53 are formed in V-shape on an outer peripheral surface of an intermediate shaft part 52a of a larger diameter of a shaft 52 which part supports a roller 51. Retaining plates 55, 56 are fixed to the shaft 52 in a manner to sandwich the roller 51 therebetween from both sides in the axial direction. The roller 51 has permanent magnets 59, 60 fixed to its end faces. On the other hand, permanent magnets 57, 58 are fixedly mounted at roller-side end faces of the respective retaining plates 55, 56 confronting the end faces of the roller 51. The opposed permanent magnets 57 and 59; 58 and 60 of the retaining plates 55, 56 and the roller 51 are of the same polarity.

As the roller 51 is rotated, a dynamic pressure is generated in an ambient fluid between the shaft 52 and the roller 51 by the grooves 53 of the shaft 52, so that the roller 51 is supported by the dynamic pressure of the fluid in the radial direction. Moreover, a repulsive force between the permanent magnets of the same polarity 57 and 59; 58, 60 supports the roller 51 in the axial direction.

Another conventional roller supporting structure is indicated in Fig. 4. In this supporting structure, grooves 63 for generating a dynamic pressure are formed in V-shape on an outer peripheral surface of an intermediate shaft part 62a, a larger diameter part, of a shaft 62 which part supports a roller 61 as in the roller supporting structure of Fig. 3. The roller 61 is sandwiched between the retaining plates 65 and 66 from both sides thereof in the axial direction. The retaining plates 65, 66 fixed to the shaft 61 also have grooves 67, 68 formed at their roller-side end faces confronting the end faces of the roller 61.

In the roller supporting structure of Fig. 4, when the roller 61 is rotated, the grooves 63 of the shaft 62 cause an ambient fluid between the shaft 62 and roller 61 to have a dynamic pressure and thereby to support the roller 61 in the radial direction with the dynamic pressure. Moreover, the grooves 67, 68 of the retaining plates 65, 66 generate a dynamic pressure in an ambient fluid between the roller 61 and the retaining plates 65, 66. Thus the roller 61 is also supported by the dynamic pressure in the axial direction. A roller supporting structure similar to that of Fig 4 is disclosed in DE-A-2404325.

The above supporting structures have the following drawbacks. In the former structure using permanent magnets for supporting the roller in the axial direction, the repulsive forces of the permanent magnets 57, 58 and 59, 60 of the retaining plates 55, 56 and the roller 51 cause forces pressing the roller 51 in the opposite axial directions even when the roller 51 is not rotated. Therefore, when there is imbalance between the repulsive forces of the permanent magnets of both sides, the imbalance causes a bending moment acting on the roller 51. The bending moment increases a frictional force between the inner peripheral surface of the roller 51 and the outer peripheral surface of the intermediate shaft part 52a of the shaft 52 when the roller 51 is started to be rotated. Therefore, a large torque is required to start the roller 51.

Meanwhile, according to the latter arrangement, since it is necessary to set a uniform gap 's' of approximately several µm between each retaining plate 65, 66 and the roller 61, squareness between each retaining plate 65, 66 and the shaft 62 and flatness of the opposed end faces of the roller 61 and the retaining plates 65, 66 must be controlled with high accuracy. Therefore, the component parts, especially the roller 61 and the retaining plates 65, 66, are required to be worked and assembled highly accurately.

### SUMMARY OF THE INVENTION

The object of the present invention is therefore to provide a roller supporting structure which can rotate a roller with a small torque and which does not require high accuracy in working and assembling of the roller and retaining plates, as compared with the conventional supporting structure.

In order to accomplish the above object, the present invention provides a roller supporting structure for rotatably supporting a roller, comprising a shaft for rotatably supporting the roller; first grooves formed on at least one of an inner peripheral surface of the roller and an outer peripheral surface of the shaft for generating a dynamic pressure between the shaft and the roller; first and second retaining plates fixed to the shaft and positioned axially on both sides of the roller so that a predetermined gap is left between the roller and each of the first and second retaining plates, respectively; and second grooves formed on at least one end face of the roller or a roller-side end face of the first retaining plate confronting the one end face of the roller, and formed on at least the other end face of the roller or a roller-side end face of the second retaining plate confronting the other end face of the roller, for generating a dynamic pressure between the roller and each retaining plate, characterized in that the above-mentioned predetermined gap left between the roller and each of the first and second retaining plates is so large that, a) when the roller stays in the middle between the first and second retaining plates, neither of the second grooves generates the dynamic pressure, and b) only when the roller is brought close to either of the first and second retaining plates, the second grooves formed on at least the roller-side end face of the either retaining plate or the end face of the roller opposed to the either retaining plate generate the dynamic pressure.

According to the above-described arrangement of the present invention, when the roller is rotated, first grooves allow a lubricating fluid present between the roller and the shaft to have a dynamic pressure, whereby the supporting structure supports the roller in the radial direction with the dynamic pressure.

Since the predetermined gap between the roller and each of the first and second retaining plates is large (for example, 0.5 mm) enough for the second grooves not to generate the dynamic pressure in a fluid present between either retaining plate and the roller when the roller stays in the middle between the first and second retaining plates and for the second grooves to generate the dynamic pressure in a fluid present between the roller and either of the first and second retaining plates only when the roller is brought close to the either retaining plate, the gap becomes much larger than that (several µm) of the prior art wherein the dynamic pressure is generated at all times between the retaining plates and the roller during the rotation of the roller. Accordingly, the squareness between the shaft and the first and second retaining plates and the flatness of the end faces of the roller and the roller-side end faces of the first and second retaining plates are not required to be so accurate as in the prior art. In consequence, it is not necessary to work and assemble the roller and retaining plates as accurately as in the prior art.

Further, since magnets are not used to support the roller in the axial direction, a bending moment does not act on the roller when the roller is not rotated. Accordingly, a smaller torque is required for starting the roller, as compared with the conventional example using the magnets.

If the first and second retaining plates are formed of plastic with lubricity, the frictional force generated between the roller and the first or second retaining plate can be decreased when the roller is in touch with the first or second retaining plate during rotation of the roller can be decreased. The roller can accordingly be rotated smoothly. Moreover, the first and second retaining plates can be molded much easier and therefore manufactured at low cost.

### BRIEF DESCRIPTION OF THE DRAWINGS

These and other objects and features of the present invention will become clear from the following description taken in conjunction with the preferred embodiment thereof with reference to the accompanying drawings throughout which like parts are designated by like reference numerals, and in which:
Fig. 1 is a cross sectional view of a roller supporting structure according to the present invention;
Fig. 2A is a plan view of a retaining plate of the structure of Fig. 1, wherein second grooves for generating a dynamic pressure are shown;
Fig. 2B is a sectional view of a part of the retaining plate of Fig. 2A;
Fig. 3 is a cross sectional view of a conventional roller supporting structure; and
Fig. 4 is a cross sectional view of another conventional roller supporting structure.

### DETAILED DESCRIPTION OF THE PREFERRED EMBODIMENT

A preferred embodiment of the present invention will be described in detail with reference to the accompanying drawings.

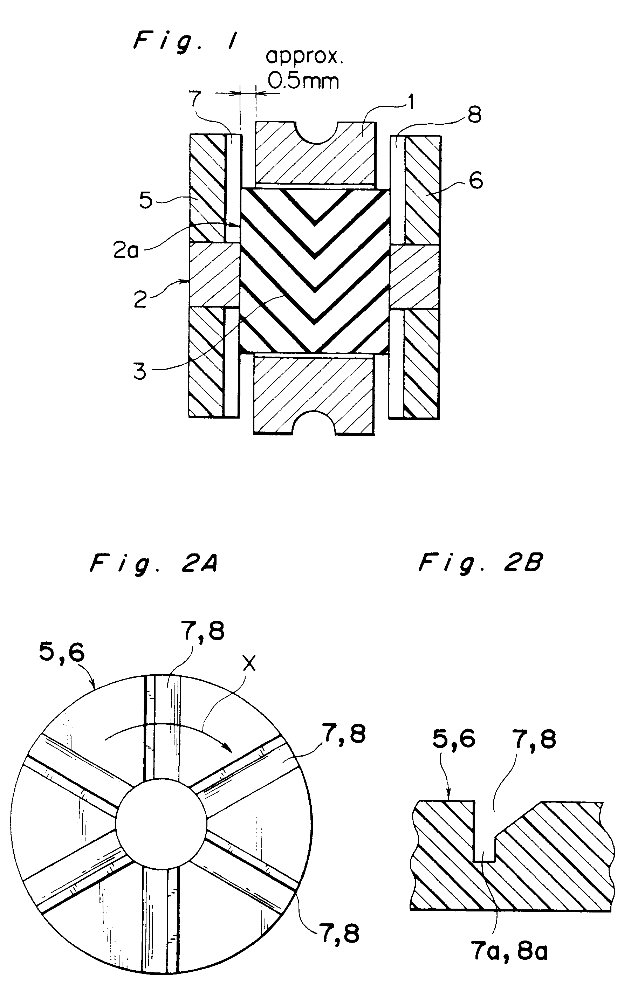

Fig. 1 illustrates a roller supporting structure according to a preferred embodiment of the present invention. As shown in this figure, a shaft 2 has an intermediate shaft part 2a of a larger diameter and supports a roller 1 around and in an axially central portion of the intermediate shaft part 2a. First grooves 3 for generating a dynamic pressure are notched in V shape in an outer peripheral surface of the intermediate shaft part 2a of the shaft 2. Retaining plates 5, 6 formed of plastic with lubricity are respectively fixed around opposite end portions of the shaft 2 in a manner to loosely sandwich the roller 1 therebetween from both sides of the roller 1 in the axial direction. The retaining plates 5, 6 rest against end faces of the intermediate shaft part 2a of the shaft 2.

The retaining plate 5 has second grooves 7 for generating a dynamic pressure on its roller-side end face which confronts one end face of the roller 1. Similarly, the retaining plate 6 has second grooves 8 on its roller-side end face which confronts the other end face of the roller 1. The second grooves 7 and 8 are arranged radially on the roller-side end faces of the retaining plates 5, 6, as shown in Fig. 2A. Moreover, as is clear from Fig. 2B, a cross section of each second groove 7, 8 has a shape of a right triangle with a rectangular portion 7a, 8a projecting inwardly of the retaining plates 5, 6. Due to this shape, it is easy to work the grooves 7, 8 on the end faces of the retaining plates 5, 6.

When the retaining plate 5 is relatively rotated in a direction of an arrow X relative to the roller 1, the second grooves 7 bring about a dynamic pressure to an ambient fluid between the roller 1 and the retaining plate 5. Similarly, when the retaining plate 6 is relatively rotated in a direction of an arrow X relative to the roller 1, the second grooves 8 bring about a dynamic pressure to an ambient fluid between the roller 1 and the retaining plate 6. However, as described below, the second grooves 7, 8 of the retaining plates 5, 6 do not generate the dynamic pressure while the roller 1 stays in the middle between the retaining plates 5, 6, that is, in the axially central portion of the intermediate shaft part 2a. The second grooves 7, 8 generate the dynamic pressure only when the roller 1 is displaced from the axially central portion of the intermediate shaft part 2a toward the retaining plate 5 or 6.

As indicated in Fig. 1, the distance between the retaining plates 5 and 6, that is, the axial length of the intermediate shaft part 2a, is so set that the roller 1 is spaced about as much as 0.5 mm from each of the roller-side end faces of the retaining plates 5, 6 when the roller 1 is at the axially central portion of the intermediate shaft part 2a. To generate the dynamic pressure, the gap between the roller and the retaining plate must be as small as several µm. Therefore, only when the roller 1 is displaced in the axial direction of the shaft 2 from the above central portion and nears the retaining plate 5 or 6 sufficiently, the second grooves 7 or 8 generate a dynamic pressure between the roller 1 and the retaining plate 5 or 6. Accordingly, although the gap between the retaining plate 5, 6 and the roller 1 located at the axially central portion of the shaft 2 is much larger than that in the prior art wherein the dynamic pressure is always generated between the retaining plates and the roller during rotation of the roller, the roller supporting structure of the present embodiment can axially support the roller 1 with the dynamic pressure when necessary.

As a result of the enlarged gap, both the squareness between the shaft 2 and each retaining plates 5, 6 and the flatness of the end faces of the roller 1 and the roller-side end faces of the retaining plates 5, 6 are not required to be as accurate as in the prior art. Thus, the degree of accuracy required in working and assembling the roller 1 and the retaining plates 5, 6 can be decreased.

In the roller supporting structure of the above-described construction, when the roller 1 is rotated, a dynamic pressure is generated in the ambient fluid present between the roller 1 and the shaft 2 because of the first grooves 3 of the shaft 2, so that the roller 1 is supported in the radial direction by the dynamic pressure. On the other hand, only when the roller 1 is displaced in the axial direction from the axial central position of the shaft 2 and brought close to the retaining plate 5 or 6, the second grooves 7 or 8 generate a dynamic pressure in the ambient fluid between the roller 1 and the retaining plate 5 or 6.

Since the retaining plates 5, 6 are made of plastic with lubricity, it is possible to make as small as possible a frictional force which will act between the roller 1 and the retaining plate 5 or 6 in case they are brought into contact with each other during rotation of the roller 1. Thus, a smooth rotation of the roller 1 is ensured. Moreover, it becomes easy to mold the retaining plates 5, 6, so that the retaining plates 5, 6 are produced inexpensively.

According to the present invention, unlike the prior art using magnets for supporting the roller in the axial direction, a bending moment does not act on the roller when the roller is not rotated, and therefore the starting torque of the roller can be reduced.

Although the second grooves 7, 8 having a cross sectional shape of a right triangular with a rectangular portion 7a, 8a are provided radially and the first grooves 3 are formed in V shape, the shapes of the first and second grooves 3; 7, 8 are not restricted to the above, but may be spiral or the like so long as they can generate a dynamic pressure.

Moreover, the first grooves 3 may be provided on an inner peripheral surface of the roller and the second grooves 7, 8 may be provided on the end faces of the roller 1.

Although the present invention has been fully described in connection with the preferred embodiment thereof with reference to the accompanying drawings, it is to be noted that various changes and modifications are apparent to those skilled in the art. Hence such changes and modifications may be made as are included within the scope of the present invention as defined by the appended claims.

## Claims

1. A roller supporting structure for rotatably supporting a roller (1), comprising:
a shaft (2) for rotatably supporting the roller (1);
first grooves (3) formed on at least one of an inner peripheral surface of the roller (1) and an outer peripheral surface of the shaft (2) for generating a dynamic pressure between the shaft (2) and the roller (1);
first and second retaining plates (5,6) fixed to the shaft (2) and positioned axially on both sides of the roller (1) so that a predetermined gap is left between the roller (1) and each of the first and second retaining plates (5,6), respectively; and
second grooves (7,8) formed on at least one end face of the roller (1) or a roller-side end face of the first retaining plate (5) confronting the one end face of the roller (1), and formed on at least the other end face of the roller (1) or a roller-side end face of the second retaining plate (6) confronting the other end face of the roller (1), for generating a dynamic pressure between the roller (1) and each retaining plate (5,6), characterized in that:
the above-mentioned predetermined gap left between the roller (1) and each of the first and second retaining plates (5,6) is so large that,
a) when the roller (1) stays in the middle between the first and second retaining plates (5,6), neither of the second grooves (7,8) generates the dynamic pressure, and
b) only when the roller (1) is brought close to either (5 or 6) of the first and second retaining plates (5,6), the second grooves (7 or 8) formed on at least the roller-side end face of the either retaining plate (5,6) or the end face of the roller (1) opposed to the either retaining plate (5 or 6) generate the dynamic pressure.

2. The roller supporting structure as set forth in claim 1, wherein the first and second retaining plates (5,6) are formed of plastic with lubricity.

3. The roller supporting structure as set forth in claim 1, wherein the predetermined gap between the roller (1) and each of the first and second retaining plates (5,6) is approximately 0.5 mm.

4. The roller supporting structure as set forth in claim 1, wherein the shaft (2) has an intermediate shaft part (2a) of a diameter larger than that of the other part of the shaft, the roller (1) being mounted in an axially central portion of the intermediate shaft part (2a), and the first and second retaining plates (5,6) are fixed to the above other part of the shaft in a manner that the first and second retaining plates (5,6) rest against end faces of the intermediate shaft part (2a).

## Patentansprüche

1. Rollentragkonstruktion zur drehbaren Lagerung einer Rolle (1) mit:
einer Welle (2) zur drehbaren Lagerung der Rolle (1); ersten Nuten (3), die an wenigstens der inneren Umfangsfläche der Rolle oder der äußeren Umfangsfläche der Welle (2) ausgebildet sind, um zwischen Welle (2) und Rolle (1) einen dynamischen Druck zu erzeugen;
einer ersten und zweiten Halteplatte (5, 6), die an der Welle (2) befestigt sind, und axial an beiden Seiten der Rolle (1) so positioniert sind, daß jeweils zwischen Rolle (1) und jeweils der ersten und zweiten Halteplatte (5, 6) ein vorbestimmter Spalt verbleibt; und
zweiten Nuten (7, 8), die an wenigstens einer Stirnfläche der Rolle (1) oder einer rollenseitigen Endfläche der ersten Halteplatte (5), die der einen Stirnfläche der Rolle (1) gegenüberliegt, und die wenigstens an der anderen Stirnfläche der Rolle (1) oder einer rollenseitigen Endfläche der zweiten Halteplatte (6), welche der anderen Stirnfläche der Rolle (1) gegenüberliegt, ausgebildet sind, um zwischen der Rolle (1) und jeder Halteplatte (5, 6) einen dynamischen Druck zu erzeugen,
dadurch **gekennzeichnet,** daß
der vorstehend erwähnte vorbestimmte Spalt, der zwischen der Rolle (1) und jeder der ersten und zweiten Halteplatte (5 und 6) belassen ist, so groß ist, daß
a) wenn die Rolle (1) in der Mitte zwischen der ersten und zweiten Halteplatte (5, 6) bleibt, keine der Nuten (7, 8) den dynamischen Druck erzeugt, und
b) nur wenn die Rolle (1) nahe an die erste oder zweite Halteplatte (5 oder 6) gebracht wird, die zweiten Nuten (7 oder 8), die wenigstens an der rollenseitigen Endfläche entweder an der Halteplatte (5, 6) oder der Stirnfläche der Rolle (1) gegenüber der jeweiligen ersten oder zweiten Halteplatte (5 oder 6), vorgesehen sind, den dynamischen Druck erzeugen.

2. Konstruktion gemäß Anspruch 1,
dadurch **gekennzeichnet,** daß die erste und zweite Halteplatte (5, 6) aus Kunststoff mit Schmiermittel gebildet sind.

3. Konstruktion nach Anspruch 1,
dadurch **gekennzeichnet,** daß der vorbestimmte Spalt zwischen Rolle (1) und der ersten und zweiten Halteplatte (5, 6) ungefähr 0,5 mm ist.

4. Konstruktion nach Anspruch 1,
dadurch **gekennzeichnet,** daß die Welle (2) einen mittleren Wellenteil (2a) mit einem Durchmesser größer als der des anderen Teils der Welle hat, wobei die Rolle (1) auf einem axial zentralen Teil des mittleren Wellenteils (2a) montiert ist, und die erste und zweite Halteplatte (5, 6) an dem vorstehenden anderen Teil der Welle so befestigt sind, daß die erste und zweite Halteplatte (5, 6) an den Stirnflächen des mittleren Wellenteils (2a) anliegen.

## Revendications

1. Structure de support de rouleau destinée à supporter un rouleau mobile en rotation, comprenant :
un arbre (2) servant à supporter le rouleau (1) mobile en rotation ;
des premières rainures (3) formées sur au moins l'une des surfaces constituées par une surface périphérique intérieure du rouleau (1) et une surface périphérique extérieure de l'arbre (2), pour engendrer une pression dynamique entre l'arbre (2) et le rouleau (1) ;
des première et deuxième plaques de retenue (5, 6) fixées à l'arbre (2) et positionnées axialement sur les deux côtés du rouleau (1), de manière qu'il subsiste une fente prédéterminée entre le rouleau (1) et chacune des première et deuxième plaques de retenue (5, 6), respectivement ; et
des deuxièmes rainures (7, 8) formées au moins sur une première face d'extrémité du rouleau (1) ou une face d'extrémité côté rouleau de la première plaque de retenue (5) qui fait face à ladite première face d'extrémité du rouleau (1), et formées au moins sur l'autre face d'extrémité du rouleau (1) ou sur une face d'extrémité côté rouleau de la deuxième plaque de retenue (6) qui est en regard de l'autre face d'extrémité du rouleau (1), pour engendrer une pression dynamique entre le rouleau et chaque plaque de retenue (5, 6), caractérisée en ce que
la fente prédéterminée mentionnée plus haut qui est laissée entre le rouleau (1) et chacune des première et deuxième plaques de retenue (5, 6) est suffisamment large pour que
a) lorsque le rouleau (1) est situé au milieu entre les première et deuxième plaques de retenue (5, 6), aucune des deuxièmes rainures (7, 8) n'engendre de pression dynamique, et
b) ce n'est que lorsque le rouleau (1) s'est rapproché de l'une ou l'autre (5 ou 6) des première et deuxième plaques de retenue (5, 6) que les deuxièmes rainures (7 ou 8) formées au moins sur la face d'extrémité côté rouleau de l'une ou l'autre des plaques de retenue (5, 6), ou sur la face d'extrémité du rouleau (1) qui est en regard de l'une ou l'autre des plaques de retenue (5, 6)) engendrent la pression dynamique.

2. Structure de support de rouleau selon la revendication 1, dans laquelle les première et deuxième plaques de retenue (5, 6) sont formées d'une matière plastique possédant des propriétés lubrifiantes.

3. Structure de support de rouleau selon la revendication 1, dans laquelle la fente prédéterminée entre le rouleau (1) et chacune des première et deuxième plaques de retenue (5, 6) est d'environ 0,5 mm.

4. Structure de support de rouleau selon la revendication 1, dans laquelle l'arbre (2) possède une partie intermédiaire (2a) de diamètre plus grand que celui de l'autre partie de l'arbre, le rouleau (1) étant monté dans une portion axialement centrale de la partie intermédiaire (2a) de l'arbre, et les première et deuxième plaques de retenue (5, 6) sont fixées à l'autre partie précité de l'arbre de manière que les première et deuxième plaques de retenue (5, 6) s'appuient contre les faces d'extrémité de la partie intermédiaire (2a) de l'arbre.
